# EUROPEAN PATENT APPLICATION

(11) **EP 4 660 932 A1**
(43) Date of publication of application: **10.12.2025**
(21) Application number: 24180854.2
(22) Date of filing: 07.06.2024
(51) Int. Cl.: G06Q 50/26, H04W 4/90

(54) **INCIDENT INFORMATION HANDLING**

(71) Applicant: Dräger Safety AG & Co. KGaA, 23560 Lübeck (DE)
(72) Inventor: VARDY, Thomas Eric, Howden, NE28 0QB (GB); BARNES, Matthew, Morpeth, NE61 2QD (GB)
(74) Representative: Haseltine Lake Kempner LLP

(57) **Abstract**

There is provided a method for handling incident information by a first node of a network. The first node is deployed at an incident response location, and is configured to operate as a transceiver between a local or remote first entity associated to an incident handling operator and breathing apparatuses associated to deployed personnel. When determining that a breathing apparatus is within a connection range of the first node, an incident session is established. Initial information associated with the incident is relayed by the node towards the first entity, while commands are relayed to the breathing apparatuses.

## Description

### Technical Field

The present disclosure relates to methods for handling incident information and entities configured to operate in accordance with those methods.

### Background

Emergency services (e.g. fire services) are organisations that ensure public safety, security, and health by addressing and resolving different emergencies. As such, emergency services require every advantage possible when dealing with emergency response incidents. This is especially true as emergency services are required to respond to increasingly more complex incidents. Indeed, an emergency response incident can involve many individuals, including both responders and members of the public, and responders are commonly equipped with specialised equipment which must be carefully monitored and maintained in order to provide safety for the responders. For example, fire services regularly deal with toxic environments created by combustible materials, resulting in smoke, oxygen deficiency, elevated temperatures, poisonous atmospheres, and violent air flows. To combat some of these risks, firefighters carry breathing apparatus (BA). The proper management of such specialised equipment can mean the difference between a successful incident outcome and disaster.

Moreover, emergency services must be ready to adapt to an array of different environments (e.g. both natural and man-made), which cause further challenges with organising and effectively dealing with an incident. As such, ineffective management of such incidents can cause serious harm to the public and result in irreparable damage to infrastructure.

In the past, emergency services (e.g. fire services) have relied on analogue tools to monitor and control the handling of emergency response incidents. For example, an entry control operative (ECO) will commonly use a physical board (e.g. an entry control board (ECB)) for keeping track of fire fighters deployed at an incident (e.g. a building fire). In such a scenario, the ECO monitors the incident by physically organising the board with the help of "tallies", which visibly show the name of the fire fighter being deployed at the incident and the time at which said fire fighter entered the incident. Thus, the tallies can be physical elements which are added and removed from the board to allow the ECO to keep track of the personnel deployed at an incident. The addition of a physical tally to the board can act as an incident registration for the corresponding firefighter. In addition to the physical board, the ECO commonly utilises walkie-talkies to manually control the incident and receive updates on the condition of personnel.

In recent years, some emergency services have adopted telemetry techniques which provide for enhanced communication between the personnel deployed at an incident. Specifically, emergency services personnel can be provided with equipment which enables (e.g. wireless) communication with other personnel and provides for the sharing of information describing the status of a wearer of said equipment, and of the equipment itself. As such, emergency services personnel can be provided with equipment that enables the transmission of vital information in real time to an ECO, which gives the ECO more time to make tactical, and potentially lifesaving decisions. Therefore, techniques utilising enhanced communication provide a significant advantage for the overall safety of individuals involved in the incident and provides greater reassurance for responders during a deployment.

However, there exist certain challenges associated with current techniques for handling incident information. In particular, although there have been advances in connectivity between individuals and entities operating at an incident, it is still a common requirement for an individual user such as an ECO, to manually setup an incident. For example, an ECO is commonly required to manually log information about the incident and the personnel present at the incident so that the incident can be managed safely. However, such a manual setup requires time which is not always available in an emergency situation. This delay in time can have serious consequences for the success of the incident, and potentially, for the safety and welfare of those involved in the incident. For example, the time delay can lead to a delay in personnel (e.g. firefighters) entering an incident (e.g. building fire). In such a case, even a few seconds worth of delay can make the difference between mission success and failure. Furthermore, the time pressure associated with manually setting up a potentially dangerous incident can lead to unforced errors being made an ECO. As a result, important data may be lost or entered incorrectly, which is detrimental to the post-incident data analysis.

### Summary

As mentioned above, there are challenges associated with existing techniques for handling incident information. In particular, at the beginning of an incident, the reliance on manual logging of incident information in order to proceed with the incident leads to time delays which reduce the likelihood of success of the incident. It would thus be valuable to provide an improved technique in which delays are minimised and chances of incident success are increased.

Therefore, according to a first aspect of the disclosure, there is provided a method for handling incident information. The method is performed by a first node of a network. The first node is deployed at an emergency response incident, and is configured to operate as a transceiver between at least one first entity of the network and one or more breathing apparatus deployed at the incident. The method comprises, in response to determining that a first breathing apparatus of the one or more breathing apparatus is within a connection range of the first node, establishing an incident session associated with the incident and the first breathing apparatus. Establishing the incident session comprises determining initial information associated with the incident and the first breathing apparatus. The method comprises initiating transmission of the initial information towards the at least one first entity.

According to a second aspect of the disclosure, there is provided a first node comprising processing circuitry configured to operate in accordance with the method described herein.

According to a third aspect of the disclosure, there is provided a system. The system comprises at least one first entity, one or more breathing apparatus, and a first node as described herein.

According to a fourth aspect of the disclosure, there is provided a computer program product, embodied on a non-transitory machine-readable medium. The computer program product comprises instructions which are executable by processing circuitry to cause the processing circuitry to perform the method described herein.

Thus, in the manner described herein, improved techniques for handling incident information are provided. Advantageously, the first node automatically establishes an incident session in response to determining that a first breathing apparatus of one or more breathing apparatus is within a connection range of the first node. The first node also initiates transmission of initial information associated with the incident and the first breathing apparatus to the at least one first entity. In this way, the establishment of an incident session is performed rapidly and automatically without the need for manual input. Indeed, core data of the incident is automatically generated by the first node and, as such, the incident session can be quickly setup with all the information required for incident deployment. As such, the delay between breathing apparatus activation (e.g. which indicates the readiness of the breathing apparatus user to deploy) and the deployment of the personnel associated with said breathing apparatus is minimised. Therefore, deployment time of personnel to the incident is advantageously reduced and thus the likelihood of a successful outcome for the incident is increased. Moreover, the first node initiates transmission of the initial information towards the at least one first entity. In this way, the initial information is instantly backed-up on another entity, providing improved robustness for incident information. Initiating transmission of the initial information in this way is also advantageous as a user of the at least one first entity (e.g. an ECO) can immediately be made aware of the characteristics of the incident and quickly take further action accordingly.

### Brief description of the drawings

For a better understanding of the techniques, and to show how they may be put into effect, reference will now be made, by way of example, to the accompanying drawings, in which:
Figure 1 is a block diagram illustrating a first node according to an embodiment;
Figure 2 is a block diagram illustrating a method performed by the first node according to an embodiment;
Figure 3 is a schematic illustration of a system according to an embodiment; and
Figure 4 is a signalling diagram illustrating an exchange of signals in a system according to an embodiment.

### Detailed Description

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

Some of the embodiments contemplated herein will now be described more fully with reference to the accompanying drawings. Other embodiments, however, are contained within the scope of the subject-matter disclosed herein, the disclosed subject-matter should not be construed as limited to only the embodiments set forth herein; rather, these embodiments are provided by way of example to convey the scope of the subject-matter to those skilled in the art.

Some of the techniques described herein are performed by a first node of a network. The first node referred to herein is configured to operate as a transceiver between at least one first entity of the network and one or more breathing apparatus (BA) deployed at the incident. In some examples, the first node can route communications between the one or more BA and the at least one first entity, and vice versa. Thus, in some examples, the first node referred to herein may be configured to operate as a repeater device between different entities of the network referred to herein. The first node referred to herein can be configured to receive communications from the at least one first entity referred to herein, and/or the one or more BA. The first node referred to herein can be configured to initiate transmission of information towards the at least one first entity referred to herein, and/or the one or more BA. Herein, the term "initiate" can mean, for example, cause or establish. Thus, any reference to an entity (e.g. the first node) "initiating transmission" will be understood to mean that the entity (e.g. the processing circuitry of the entity) can be configured to itself transmit (e.g. via a communications interface of the entity) or can be configured to cause another entity to transmit. The first node can be referred to herein as a "hub" and/or a "base station (BS)" (e.g. of the network).

The techniques described herein can be used in respect of any network, such as any communications or telecommunications network, e.g. cellular network. The network referred to herein may be a radio network. For example, the network referred to herein may be a 2.4GHz radio network. In some examples, the network may comprise a Wi-Fi network (e.g. based on the Institute of Electrical and Electronics Engineers (IEEE) 802.11 family of standards). Alternatively, or in addition, the network may comprise a Bluetooth network (e.g. based on the IEEE 802.15.1 family of standards).

Some of the techniques described herein involve a wireless device. A wireless device, as described herein, may be any type of wireless device. More specifically, a wireless device as referred to herein may be any device configured to communicate wirelessly with one or more other entities (e.g. of the network referred to herein). For example, the wireless device may be a user equipment (UE). The wireless device referred to herein can include, but is not limited to, a smart device such as a smartphone or a tablet. The wireless device can be configured to run an application (or "app") which, for example, enables the wireless device to communicate with one or more other entities of the network. The application may provide a user of the wireless device (e.g. an ECO) with the ability to manage and/or control an incident as described herein. The wireless device may be configured to enable the user to create, edit and/or view incident information. For example, the wireless device may be configured to enable the user of the wireless device to view the one or more BA (e.g. deployed at the incident). Alternatively, or in addition, the wireless device may be configured to enable the user of the wireless device to (re)configure the one or more BA and/or the respective one or more wearers of the one or more BA into groups (e.g. teams). The reconfiguration can comprise, for example, assigning and/or removing a BA, and/or a wearer of the BA, to and/or from a group respectively. As such, the incident can be controlled and managed (e.g. centrally) using the wireless device.

As described herein, the first node referred to herein is deployed at an emergency response incident. Herein an emergency response incident may be any type of emergency response incident. More specifically, an emergency response incident may be any incident which involves the addressing and/or resolving of an emergency. An emergency, as referred to herein, can be an urgent, unexpected and/or dangerous situation that poses an immediate risk to health, life, property and/or environment. An emergency may require urgent intervention to prevent a worsening of the situation. Examples of the emergency response incident referred to herein include, but are not limited to, incidents which pose a danger to life, a danger to health, and/or a danger to the environment. For example, the emergency response incident referred to herein may include a fire related incident (e.g. a building fire, a forest fire, a car fire, etc.). Alternatively, or in addition, the emergency response incident referred to herein may involve hazardous material operations (e.g. dealing with substances which are a risk to health, safety, property, and/or the environment).

The techniques described herein involve one or more BA. A breathing apparatus as referred to herein can be configured to initiate transmission of information (e.g. signals) and/or receive information. For example, the one or more BA referred to herein can be configured to initiate transmission of information towards the first node referred to herein. The one or more BA referred to herein may be any type of BA. More specifically, the one or more BA referred to herein may be any type of apparatus (e.g. device) which is worn by a wearer of the one or more BA in order to provide a supply of breathable gas (e.g. air) to the wearer. As such, a BA can be advantageously utilised in an atmosphere that is immediately dangerous to life or health. In an example, the one or more BA referred to herein may comprise a self-contained breathing apparatus (SCBA) and/or a compressed air breathing apparatus (CABA). The one or more BA referred to herein may comprise a closed-circuit BA. Alternatively, the one or more BA referred to herein may comprise an open-circuit BA. The one or more BA referred to herein may comprise a lung demand regulator, a face mask, a compressed breathing gas tank, and/or a support frame. A BA may be worn by a firefighter. Thus, a wearer of a BA may be a firefighter. In some examples, The one or more Ba referred to herein may be associated with one or more firefighters.

The techniques described herein involve establishment of an incident session. An incident session, as referred to herein, can refer to an information exchange between two or more communicating entities in a network (e.g. a message exchange). The information exchanged can comprise the incident information referred to herein. For example, the information exchanged during the incident session can be information associated with the emergency response incident referred to herein. An incident session can be established (e.g. set up) at a certain point in time (e.g. using a session establishment protocol). An incident session can be terminated at a later point in time. The incident session referred to herein may be identified by an incident session identifier. An incident session identifier can be a piece of data that can be used (e.g. in communications with another entity) to identify an incident session. An incident session identifier may be a unique identifier and/or a uniquely derived identifier. Herein, the incident session defined herein can involve the first node referred to herein, and at least one of the one or more BAs (e.g. the first BA) referred to herein, and the at least one entity referred to herein. The incident session can be for handling (e.g. communicating, storing, analysing, etc.) incident information (e.g. commands, alerts, status updates, etc.) associated with the emergency response incident referred to herein.

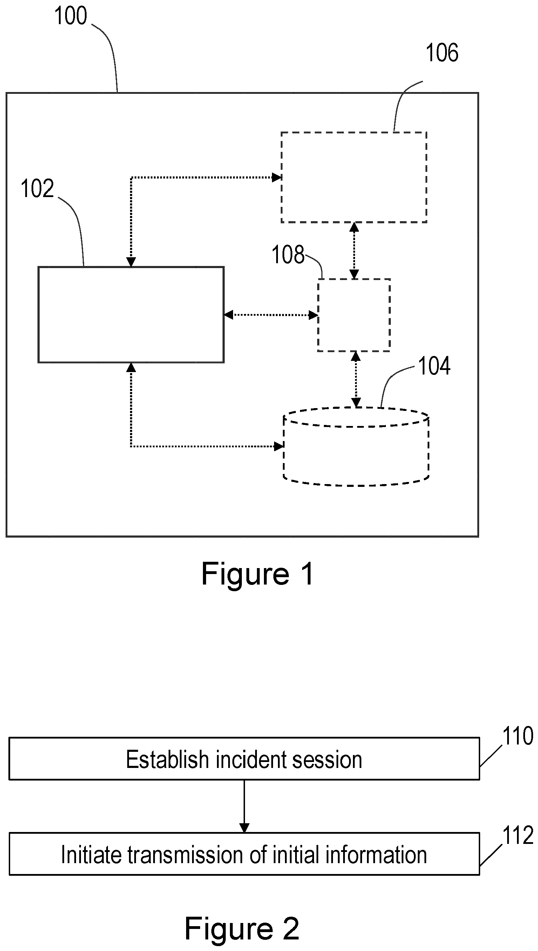

**Figure 1** illustrates a first node 100 according to an embodiment. The first node 100 can be for handling incident information.

As illustrated in Figure 1, the first node 100 comprises processing circuitry (or logic) 102. The processing circuitry 102 controls the operation of the first node 100 and can implement the method described herein in respect of the first node 100. The processing circuitry 102 can be configured or programmed to control the first node 100 in the manner described herein.

The processing circuitry 102 can comprise one or more hardware components, such as one or more processors (e.g. one or more microprocessors, one or more multi-core processors, and/or one or more digital signal processors (DSPs)), one or more processing units, one or more processing modules, and/or one or more controllers (e.g. one or more microcontrollers). The one or more hardware components can be arranged on one or more printed circuit board assemblies (PCBAs) contained in one or more housing components. The one or more hardware components may be configured or programmed (e.g. using software or computer program code) to perform the various functions described herein in respect of the first node 100. In particular implementations, each of the one or more hardware components can be configured to perform, or is for performing, individual or multiple steps of the method described herein in respect of the first node 100. The processing circuitry 102 can be configured to run software to perform the method described herein in respect of the first node 100. The processing circuitry 102 can thus be implemented in numerous ways, with software and/or hardware, to perform the various functions described herein in respect of the first node 100.

Briefly, the processing circuitry 102 of the first node 100 is configured to operate as a transceiver between at least one first entity of the network and one or more breathing apparatus deployed at the incident. The processing circuitry 102 of the first node 100 is further configured to, in response to determining that a first breathing apparatus of the one or more breathing apparatus is within a connection range of the first node, establish an incident session associated with the incident and the first breathing apparatus. Establishing the incident session comprises determining initial information associated with the incident and the first breathing apparatus. The processing circuitry 102 of the first node 100 is further configured to initiate transmission of the initial information towards the at least one first entity.

As illustrated in Figure 1, the first node 100 may optionally comprise a memory 104. Alternatively, the memory 104 may be external to (e.g. separate to or remote from) the first node 100. The memory 104 may comprise any type of non-transitory machine-readable medium, such as at least one cache or system memory. The memory 104 may comprise a volatile or a non-volatile memory. Examples of the memory 104 include, but are not limited to, a random access memory (RAM), a static RAM (SRAM), a dynamic RAM (DRAM), a read-only memory (ROM), a programmable ROM (PROM), an erasable PROM (EPROM), and an electrically erasable PROM (EEPROM), and/or any other memory.

The processing circuitry 102 can be communicatively coupled (e.g. connected) to the memory 104. The processing circuitry 102 may be configured to communicate with and/or connect to the memory 104. The memory 104 may be for storing program code or instructions which, when executed by the processing circuitry 102, cause the first node 100 to operate in the manner described herein. For example, the memory 104 may be configured to store program code or instructions that can be executed by the processing circuitry 102 to cause the first node 100 to operate in accordance with the method described herein in respect of the first node 100. Alternatively or in addition, the memory 104 can be configured to store any information, data, messages, requests, responses, indications, notifications, signals, or similar, that are described herein. The processing circuitry 102 may be configured to control the memory 104 to store information, data, messages, requests, responses, indications, notifications, signals, or similar, that are described herein.

As illustrated in Figure 1, the first node 100 may optionally comprise a user interface 106. The user interface 106 can be configured to render (or output, display, or provide) information required by or resulting from the method described herein. For example, the user interface 106 may be configured to render (or output, display, or provide) any information, data, messages, requests, responses, indications, notifications, signals, or similar, that are described herein. Alternatively or in addition, the user interface 106 can be configured to receive a user input. For example, the user interface 106 may allow a user to manually enter information or instructions, interact with, and/or control the first node 100. Thus, the user interface 106 may be a user interface that enables the rendering (or outputting, displaying, or providing) of information and/or that enables a user to provide a user input. For example, the user interface 106 may be configured to display incident information indicative of an evacuation order for personnel deployed at the incident.

The user interface 106 may comprise one or more components for rendering information and/or one or more components that enable the user to provide a user input. The one or more components for rendering information can comprise one or more visual components (e.g. a display or display screen, a graphical user interface (GUI) such as a touch screen, one or more lights such one or more light emitting diodes (LEDs), and/or any other visual component), one or more audio components (e.g. one or more speakers, and/or any other audio component), and/or one or more tactile/haptic components (e.g. a vibration function, or any other haptic/tactile feedback component), or any other user interface, or combination of user interfaces. The one or more components that enable the user to provide a user input can comprise one or more visual components (e.g. one or more switches, one or more buttons, a keypad, a keyboard, a mouse, a graphical user interface (GUI) such as a touch screen, and/or any other visual component), and/or one or more audio components (e.g. one or more microphones, and/or any other audio component), and/or one or more tactile/haptic components (e.g. a vibration function, or any other haptic/tactile feedback component), or any other user interface, or combination of user interfaces.

As illustrated in Figure 1, the first node 100 may optionally comprise a communications interface (or communications circuitry) 108. The communications interface 108 can be communicatively coupled (e.g. connected) to the processing circuitry 102, the memory 104, and/or the user interface 106. Although the communications interface 108 and the user interface 106 are illustrated as separate interfaces, in other embodiments, the communications interface 108 may be part of the user interface 106. The processing circuitry 102 may be configured to communicate with and/or connect to the communications interface 108. In some embodiments, the processing circuitry 102 can be configured to control the communications interface 108 to operate in the manner described herein. The communications interface 108 can be for enabling the first node 100, or components of the first node 100 (e.g. the processing circuitry 102, the memory 104, the user interface 106, and/or any other components of the first node 100), to communicate with and/or connect to each other and/or one or more other components.

For example, the communications interface 108 may be operable to allow the processing circuitry 102 to communicate with and/or connect to the memory 104 and/or vice versa. Similarly, the communications interface 108 may be operable to allow the processing circuitry 102 to communicate with and/or connect to the user interface 106 and/or vice versa. Similarly, the communications interface 108 may be operable to allow the processing circuitry 102 to communicate with and/or connect to any one or more other entities (e.g. any one or more of the one or more BA, the at least one entity, or any other entity) referred to herein. The communications interface 108 can be configured to transmit and/or receive information, data, messages, requests, responses, indications, notifications, signals, or similar, that are described herein. The processing circuitry 102 may be configured to control the communications interface 108 to transmit and/or receive information, data, messages, requests, responses, indications, notifications, signals, or similar, that are described herein.

The communications interface 108 may enable the first node 100, or components of the first node 100, to communicate and/or connect in any suitable way. For example, the communications interface 108 may enable the first node 100, or components of the first node 100, to communicate and/or connect wirelessly, via a wired connection, or via any other communication (or data transfer) mechanism. In some wireless implementations, for example, the communications interface 108 may enable the first node 100, or components of the first node 100, to use radio frequency (RF), Wi-Fi, Bluetooth, or any other wireless communication technology to communicate and/or connect. In some examples, the communications interface 108 may comprise a proprietary radio module.

Although the first node 100 is illustrated in Figure 1 as comprising a single memory 104, it will be appreciated that the first node 100 may comprise at least one memory (i.e. a single memory or a plurality of memories) 104 that operate in the manner described herein. Similarly, although the first node 100 is illustrated in Figure 1 as comprising a single user interface 106, it will be appreciated that the first node 100 may comprise at least one user interface (i.e. a single user interface or a plurality of user interfaces) 106 that operate in the manner described herein. Similarly, although the first node 100 is illustrated in Figure 1 as comprising a single communications interface 108, it will be appreciated that the first node 100 may comprise at least one communications interface (i.e. a single communications interface or a plurality of communications interfaces) 108 that operate in the manner described herein. It will also be appreciated that Figure 1 only shows the components required to illustrate an embodiment of the first node 100 and, in practical implementations, the first node 100 may comprise additional or alternative components to those shown.

**Figure 2** illustrates a method according to an embodiment. The method is for handling incident information. The first node 100 described earlier with reference to Figure 1 can be configured to operate in accordance with the method as described with reference to Figure 2. For example, the method can be performed by or under the control of the processing circuitry 102 of the node 100. As mentioned herein, the first node 100 is configured to operate as a transceiver between at least one first entity and one or more BA.

With reference to Figure 2, at block 110, in response to determining that a first BA of the one or more BA is within a connection range of the first node 100, an incident session associated with the incident and the first BA is established. More specifically, the first node 100 (e.g. the processing circuitry 102 of the first node 100) establishes the incident session. Establishing the incident session comprises determining initial information associated with the incident and the first BA. More specifically, the first node 100 (e.g. the processing circuitry 102 of the first node 100) determines the initial information.

Therefore, as soon as the first BA is within a connection range of the first node 100, the first node 100 can automatically start an incident session. In some examples, the first node 100 can automatically start generating, obtaining and/or logging information about the incident. For example, the first node 100 may log all information received (e.g. via telemetry) from the first BA. The connection range of the first node 100 may be 0-1.5 kilometres (km). The connection range can depend on the environment associated with the incident. For example, the upper limit of the connection range of the first node 100 may be less than 1.5km if the first node 100 is deployed at an incident associated with a densely populated environment (e.g. in a city).

The initial information referred to herein can comprise information indicative of one or more initial characteristics and/or parameters associated with the incident. In some examples, the initial information can comprise a snapshot of information associated with the start of the incident. In some examples, the initial information can comprise information indicative of one or more of a start time of the incident, a geographical location of the incident, and an initial pressure value associated with the first BA. In some examples, determining the geographical location of the incident based on a global positioning satellite (GPS) measurement. As such, the first node 100 may be configured with GPS functionality. The information indicative of the initial pressure value associated with the first BA can be received from the first BA according to some examples. The initial pressure value associated with the first BA may be the pressure value associated with the first BA when establishment of the incident session is initiated.

As illustrated by block 112 of Figure 2, transmission of the initial information is initiated towards the at least one first entity. More specifically, the first node 100 (e.g. the processing circuitry 102 of the first node 100) initiates transmission of the initial information (e.g. via the communications interface 108 of the first node 100). As such, the at least one first entity can receive incident related information (e.g. the initial information) from the first node 100 as soon as the incident session is established. In some examples, the transmission of the initial information towards the first entity may be initiated in response to establishing the incident session. By initiating transmission of the initial information towards the at least one first entity, information about the incident is backed-up. As such, the technique is robust as multiple entities obtain the information about the incident.

In some examples, the at least one first entity can comprise one or more of a wireless device deployed at the incident; and a cloud entity. As such, in some examples, the initial information referred to herein may be transmitted to the wireless device and/or the cloud entity. Therefore, in some examples, upon establishment of the incident session the first node 100 can transmit (e.g. push) the initial information to the cloud entity. The cloud entity can be associated with a command centre of the incident. As such, in some examples, the command centre can be quickly provided with the initial information as soon as the incident session is established. Therefore, personnel located at a command centre may be able to see the status of the incident from the moment the one or more BAs become active (e.g. when they are turned on). Communications between the first node 100 and the cloud entity as referred to herein may be made according to long term evolution (LTE) standards.

In examples in which the at least one first entity comprises the wireless device, the first node 100 may receive, from the wireless device, a first request for information associated with the one or more breathing apparatus. In some examples, the first request can be received before establishment of the incident session and/or transmission initiation of the initial information. The first request may be a general request. For example, the first request may a request for information of any BA that is within the connection range of the first node 100. In some examples, initiating transmission of the initial information towards the wireless device can be performed in response to receiving the first request.

In examples in which the at least one first entity comprises the wireless device, a command may be received, from the wireless device. More specifically, the first node 100 (e.g. the processing circuitry 102 of the first node 100) may receive the command from the wireless device (e.g. via the communications interface 108 of the first node 100). In some of these examples, transmission of the command can be initiated towards the first BA. More specifically, the first node 100 (e.g. the processing circuitry 102 of the first node 100) may initiate transmission of the command to the first BA (e.g. via the communications interface 108 of the first node 100). The command may be (e.g. uniquely) associated with the first BA. For example, the command may comprise an evacuation order for the first BA. The evacuation order can be indicative that the first BA has been selected to evacuate the incident. As such, a wearer of the first BA can be made aware of commands given by an ECO.

In some examples, a second request may be received from the first BA. More specifically, the first node 100 (e.g. the processing circuitry 102 of the first node 100) may receive the second request (e.g. via the communications interface 108 of the first node 100). The second request can be a request to connect to the first node 100. For example, the first BA may broadcast the second request upon powering on (e.g. being turned on by a user). In this way, the first BA may be configured to automatically attempt to connect to any first node 100 within a connection range of the first BA. The second request may be referred to herein as a "logon request". In some examples, the first node 100 may determine that the first BA is within the connection range of the first node 100 based on the second request.

In some examples, the initial information as referred to herein may be stored as labelled information corresponding to the incident session. More specifically, the first node 100 (e.g. the processing circuitry 102 of the first node 100) may store the initial information (e.g. via the memory 104 of the first node 100). The initial information may be stored in response to determining that the first BA is within the connection range of the first node 100. As such, the first node 100 may begin storing (e.g. logging) information and/or data about the incident as soon as a BA comes within connection range of the first node 100. In this way, it can be ensured that no incident information and/or data is lost. As a result, post incident information and/or data analysis is improved.

In some examples, after the incident session has been established, updated information associated with the first BA may be received from the first BA. More specifically, the first node 100 (e.g. the processing circuitry 102 of the first node 100) may receive the updated information from the first BA (e.g. via the communications interface 108 of the first node 100). The updated information may be received continuously and/or periodically. The updated information can comprise information indicative of a state of the first breathing apparatus. For example, the updated information can comprise information indicative of a current status of the first BA. In some examples, the updated information can comprise information indicative of an updated pressure value of the first BA. A pressure value of the first BA, as referred to herein, may be a (e.g. breathable) air pressure value. For example, the pressure value of the first BA may correspond to a remaining air pressure stored in the first BA. In some examples, the updated information may be stored. More specifically, the first node 100 (e.g. the processing circuitry 102 of the first node 100) may store the updated information (e.g. via the memory 104 of the first node 100). Therefore, in some examples, the first node 100 can log (e.g. keep track of) a status of the first BA throughout the incident (e.g. from beginning to end).

In some examples, transmission of the updated information may be initiated towards the at least one first entity (e.g. the wireless device referred to herein, and/or the cloud entity referred to herein). More specifically, the first node 100 (e.g. the processing circuitry 102 of the first node 100) may initiate transmission of the updated information (e.g. via the communications interface 108 of the first node 100). As such, the at least one first entity can receive the updated information from the first node 100. In this way, the at least one first entity can be made aware of any updates to the incident and/or the one or more BAs. As such, in examples in which the at least one first entity comprises the wireless device, a user of the wireless device (e.g. an ECO) can be made aware of the manner in which the incident is evolving, and can control the progress of the incident in a corresponding manner. Similarly, in examples in which the at least one first entity comprises the cloud entity, a command centre may be made aware of the progress of the incident.

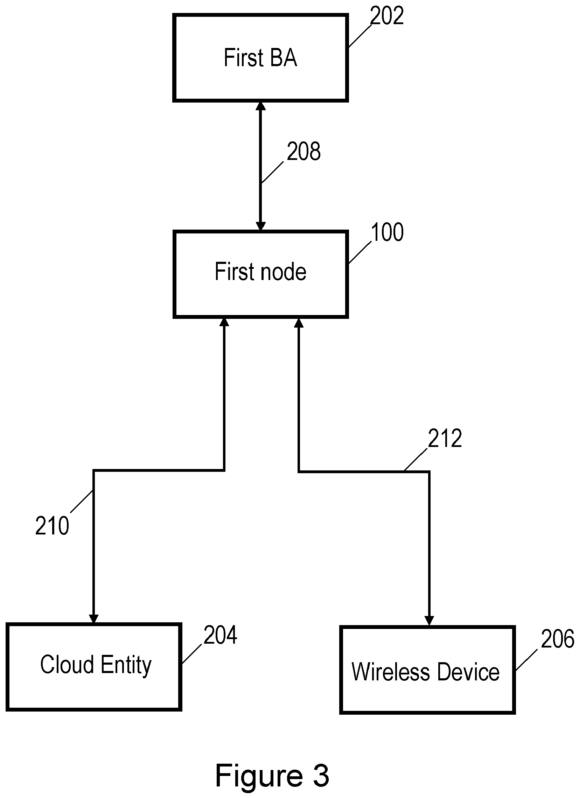

**Figure 3** is a block diagram illustrating a system according to an embodiment. As illustrated in Figure 3, the system can comprise a first node 100, as referred to herein, a first BA 202, as referred to herein, and at least one first entity 204, 206 as referred to herein. As illustrated in Figure 3, in some examples, the at least one first entity 204, 206 can comprise a cloud entity 204 as referred to herein, and a wireless device 206 as referred to herein. As illustrated by arrows 208, 210 and 212 of Figure 3, the first node 100 is configured to operate as a transceiver between the at least one first entity 204, 206 and one or more BA comprising the first BA 202.

In some examples, each of the first BA 202, the first node 100, and the wireless device 206 can be deployed (e.g. present) at the incident as referred to herein. In some examples, the cloud entity 204 may not be deployed at the incident as referred to herein. For example, the cloud entity may comprise a cloud server that is separate (e.g. geographically) to the incident.

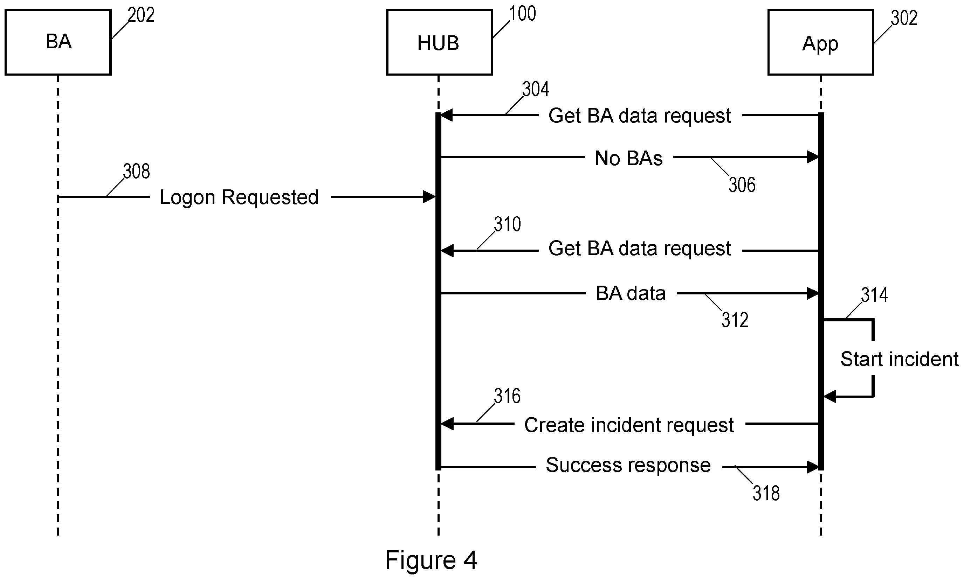

**Figure 4** is a signalling diagram illustrating an exchange of signals in a system according to an embodiment. As illustrated in Figure 4, the system can comprise a first node 100 ("HUB") as referred to herein, a first BA 202 ("BA") as referred to herein, and at least one first entity ("App") as referred to herein. In the example illustrated in Figure 4, the at least one first entity can comprise a wireless device as defined herein. The wireless device can be configured to run an application (app) as described herein. Although not shown in the example illustrated in Figure 4, it will be understood that the system may comprise a cloud entity, as referred to herein, according to other examples.

As illustrated by arrow 304 of Figure 4, in some examples, the wireless device 302 may initiate transmission of a first message ("Get BA data request") towards the first node 100. Thus, the first node 100 can receive the first message from the wireless device 302. The first message may comprise a first request, as defined herein. As such, in some examples, the first message can comprise a first request requesting that the first node 100 provide information about one or more BA connected to the first node 100. In the example illustrated in Figure 4, when the first node 100 receives the first message from the wireless device 302, the first node 100 has not yet determined that the first BA 202 is within the connection range of the first node 100. As illustrated by arrow 306 of Figure 4, in some examples, if the first node 100 has not determined that a first BA 202 (e.g. or any BA) is within a connection range of the first node 100, the first node 100 may initiate transmission of a second message ("No BAs") towards the wireless device 302. Thus, the wireless device 302 can receive the second message from the first node 100.

The second message can comprise information indicative that the first node 100 is not aware of (e.g. connected to) any BA (e.g. the one or more BA referred to herein).

As illustrated by arrow 308 of Figure 4, in some examples, the first BA 202 may initiate transmission of a second request ("Logon Requested"), as defined herein, towards the first node 100. Thus, the first node 100 can receive the second request from the first BA 202. As described herein, the second request can be a request (e.g. for the first BA 202) to connect to the first node 100. The second request can be a request for the first BA 202 to (e.g. exclusively) couple to the first node 100. Therefore, in some examples, the first BA 202 may connect to only a single first node (e.g. of a plurality of first nodes). In some examples, the first node 100 may determine that the first BA 202 is within the connection range of the first node 100 based on the second request. For example, receiving the second request may allow the first node 100 to determine that the first BA 202 is within the connection range of the first node 100. As described herein, the first node 100 establishes an incident session in response to determining that the first BA 202 is within the connection range of the first node 100. As also described herein, establishing the incident session comprises determining initial information associated with the incident and the first BA 202, as defined herein.

As illustrated by arrow 310 of Figure 4, the wireless device 302 may initiate transmission of a first request ("Get BA data request"), as defined herein, towards the first node 100. As such, the first node 100 can receive the first request from the wireless device 302. The first request can be a request for the information associated with the one or more BA referred to herein. As illustrated in Figure 4, in some examples the first node 100 may have determined that the first BA 202 is within the connection range upon receiving the first request. Therefore, as illustrated by arrow 312 of Figure 4, in some examples the first node 100 may initiate transmission of the initial information, as defined herein, towards the wireless device in response to receiving the first request. Thus, the wireless device 302 can receive the initial information from the first node 100.

As illustrated by arrow 314 of Figure 4, in some examples, the wireless device may establish the incident session on the wireless device based on the initial information. As such, the incident session established on the wireless device can be the same as that established on the first node 100.

As illustrated by arrow 316 of Figure 4, in some examples, the wireless device 302 may initiate transmission of a third message ("Create incident request") towards the first node 100. Thus, the first node 100 can receive the third message from the wireless device 302. The third message can comprise information indicative of a request for the wireless device 302 to receive (e.g. updated) incident information associated with the incident session established at the first node 100. In some examples, the information comprised in the third message can be a request for the wireless device 302 to be the only wireless device (e.g. of its type) to be involved in the incident session. In some of these examples, the incident session may be configured to involve only a single wireless device (e.g. the wireless device 302). In this way, the wireless device may be able to securely manage and/or control the progression of the incident via the first node 100. For example, as described herein, the wireless device 302 can transmit a command associated with the first breathing apparatus 202 towards the first node 100, which can then be transmitted the command towards the first breathing apparatus 202.

As illustrated by arrow 318 of Figure 4, the first node 100 can initiate transmission of a fourth message ("Success response") towards the wireless device 302. Thus, the wireless device 302 can receive the fourth message from the first node 100. The fourth message can comprise information indicative of a response to the request associated with the third message. For example, the information comprised in the fourth message may indicate whether the request associated with the third message has been successful. As such, in some examples, the information comprised in the fourth message can be indicative that the request associated with the third message has been successful. Therefore, the wireless device 302 can (e.g. actively) take part in the incident session established at the first node 100. In some examples, the first node 100 may initiate transmission of all information associated with the incident session towards the wireless device 302. As such, the wireless device 302 can be made aware of the (e.g. changing) status of the BA (e.g. the first BA 202) that are deployed at the incident. After establishment of the incident session, a user of the wireless device 302 can input (e.g. additional) information about the incident into the wireless device 302. As such, the incident session can be updated based on information input to the wireless device 302. In some examples, a user may update incident information (e.g. incident) location using the wireless device 302.

As described herein, the first node 100 establishes an incident session in response to determining that the first BA 202 is within connection range of the first node. It will be understood that an incident session may be established in response to the first node 100 receiving an establishment request from the wireless device 302. For example, a user of the wireless device 302 (e.g. an ECO) may manually establish an incident session using the wireless device 302. Information associated with the incident session established on the wireless device 302 can then be transmitted towards the first node 100 which may then establish the incident session on the first node 100 based on the information. In this way, the user of the wireless device 302 can input incident session information before the incident itself actually starts.

There is also provided a computer program embodied on a non-transitory machine-readable medium. The non-transitory machine-readable medium comprises instructions. The instructions are executable such that, on execution by a suitable computer or processor, the computer or processor is caused to perform the method described herein. The non-transitory machine-readable medium may be, for example, any entity or device capable of carrying the computer program product. For example, the non-transitory machine-readable medium may include a data storage, such as a ROM (such as a CD-ROM or a semiconductor ROM) or a magnetic recording medium (such as a hard disk). Furthermore, the non-transitory machine-readable medium may be a transmissible carrier, such as an electric or optical signal, which may be conveyed via electric or optical cable or by radio or other means. When the computer program product is embodied in such a signal, the non-transitory machine-readable medium may be constituted by such a cable or other device or means. Alternatively, the non-transitory machine-readable medium may be an integrated circuit in which the computer program product is embedded, the integrated circuit being adapted to perform, or used in the performance of, the method described herein.

The techniques described herein facilitate rapid establishment (e.g. creation) of an incident automatically upon determining that a BA is within connection range of the first node referred to herein. In this way, an incident session can be established without delay and thus a faster deployment of personnel, and equipment associated with the incident, can be realised. Establishment of the incident advantageously involves automatic generation of core data about the incident. As such, the techniques described herein provide for the automation of previously manual processes (e.g. manually inputting incident information by hand, for example, for each BA of a plurality of BA). In this way, the techniques free system operators to concentrate on interacting and controlling more critical aspects of the incident, and/or on obtaining additional information about the incident (e.g. photos, drawings, notes, etc.). Moreover, initial information about the incident is automatically transmitted (e.g. pushed) to a first entity. As such, the techniques described herein provide for instantaneous information sharing and data backup, improving the safety associated with managing an emergency response incident.

Variations to the disclosed embodiments can be understood and effected by those skilled in the art in practicing the principles and techniques described herein, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A method for handling incident information, wherein the method is performed by a first node (100) of a network, wherein the first node (100) is deployed at an emergency response incident, and wherein the first node (100) is configured to operate as a transceiver between at least one first entity (204, 206, 302) of the network and one or more breathing apparatus deployed at the incident, the method comprising:
in response to determining that a first breathing apparatus (202) of the one or more breathing apparatus is within a connection range of the first node (100), establishing (110) an incident session associated with the incident and the first breathing apparatus (202), wherein establishing the incident session comprises determining initial information associated with the incident and the first breathing apparatus (202); and
initiating (112, 312) transmission of the initial information towards the at least one first entity (204, 206, 302).

2. The method as claimed in claim 1, wherein the initial information comprises information indicative of one or more of:
a start time of the incident;
a geographical location of the incident; and
an initial pressure value associated with the first breathing apparatus (202).

3. The method as claimed in claim 2, the method comprising:
determining the geographical location of the incident based on a global positioning satellite, GPS, measurement.

4. The method as claimed in any of the preceding claims, wherein the at least one first entity (204, 206, 302) comprises one or more of:
a wireless device (206, 302) deployed at the incident; and
a cloud entity (204).

5. The method as claimed in claim 4, wherein the at least one first entity (204, 206, 302) comprises the wireless device (206, 302), the method comprising:
receiving (310), from the wireless device (206, 302), a first request for information associated with the one or more breathing apparatus; and
initiating (312) transmission of the initial information towards the wireless device (206, 302) in response to receiving the first request.

6. The method as claimed in claim 4 or 5, wherein the at least one first entity (204, 206, 302) comprises the wireless device (206, 302), the method comprising:
receiving, from the wireless device (206, 302), a command associated with the first breathing apparatus (202); and
initiating transmission of the command towards the first breathing apparatus (202).

7. The method as claimed in any of the preceding claims, the method comprising:
receiving (308), from the first breathing apparatus (202), a second request from the first breathing apparatus (202), wherein the second request is a request to connect to the first node (100).

8. The method as claimed in claim 7, wherein determining that the first breathing apparatus (202) is within the connection range of the first node (100) is based on the second request.

9. The method as claimed in any of the preceding claims, wherein establishing (110) the incident session comprises:
storing the initial information as labelled information corresponding to the incident session.

10. The method as claimed in any of the preceding claims, the method comprising:
after the incident session has been established, receiving, from the first breathing apparatus (202), updated information associated with the first breathing apparatus (202), wherein the updated information comprises information indicative of a state of the first breathing apparatus (202); and
storing the updated information.

11. The method as claimed in claim 10, the method comprising:
initiating transmission of the updated information towards the at least one first entity (204, 206, 302).

12. The method as claimed in any of the preceding claims, wherein the network is a radio network.

13. A first node (100) comprising:
processing circuitry (102) configured to operate in accordance with any of claims 1 to 12.

14. A system comprising:
at least one entity;
one or more breathing apparatus; and
a first node as defined in claim 13.

15. A computer program product, embodied on a non-transitory machine-readable medium, comprising instructions which are executable by processing circuitry to cause the processing circuitry to perform the method according to any of claims 1 to 12.
